# FASCICULE DE BREVET EUROPEEN

(11) **EP 4 291 431 B1**
(45) Date de publication et mention de la délivrance du brevet: **04.02.2026**
(21) Numéro de dépôt: 22704535.8
(22) Date de dépôt: 09.02.2022
(51) Int. Cl.: B60K 11/08, B60K 11/04, B60K 1/00, F01P 11/10, F01P 3/18, F01P 5/06, F01D 17/04, F04D 29/42

(54) **MODULE DE REFROIDISSEMENT POUR VÉHICULE AUTOMOBILE ÉLECTRIQUE OU HYBRIDE À TURBOMACHINE TANGENTIELLE**
KÜHLMODUL FÜR EIN ELEKTRO- ODER HYBRIDKRAFTFAHRZEUG MIT EINER TANGENTIALFLUSSTURBOMASCHINE
COOLING MODULE FOR AN ELECTRIC OR HYBRID MOTOR VEHICLE, HAVING A TANGENTIAL-FLOW TURBOMACHINE

(30) Priorité: 11.02.2021 FR 2101300
(43) Date de publication de la demande: 20.12.2023
(73) Titulaire: VALEO SYSTEMES THERMIQUES, 78320 Le Mesnil Saint-Denis (FR)
(72) Inventeur: MAMMERI, Amrid, 78320 Le Mesnil-Saint-Denis (FR); AZZOUZ, Kamel, 78320 Le Mesnil-Saint-Denis (FR); TRAORE, Issiaka, 78320 Le Mesnil-Saint-Denis (FR); GARNIER, Sebastien, 78320 Le Mesnil-Saint-Denis (FR)
(74) Mandataire: Valeo Powertrain Systems
(86) Numéro de dépôt international: PCT/EP2022/053151
(87) Numéro de publication internationale: WO 2022/171688

(56) Documents cités:
- EP-A1- 1 715 157
- WO-A1-2020/065204
- JP-A- 2000 211 377
- US-A- 4 438 732
- US-A1- 2005 029 027

## Description

L'invention se rapporte à un module de refroidissement pour véhicule automobile électrique ou hybride, à turbomachine tangentielle.

Un module de refroidissement (ou module d'échange de chaleur) d'un véhicule automobile comporte classiquement au moins un échangeur de chaleur et un dispositif de ventilation adapté à générer un flux d'air au contact du au moins un échangeur de chaleur. Ce dispositif de ventilation se présente par exemple sous la forme d'une turbomachine tangentielle qui permet notamment de générer un flux d'air au contact du ou des échangeurs de chaleur, en particulier lorsque le véhicule est à l'arrêt ou lorsqu'il se déplace à faible vitesse.

En roulage, une vitesse élevée du véhicule peut suffire à créer le flux d'air sans aide de la turbomachine tangentielle. Cependant, la turbomachine tangentielle peut faire obstacle au flux d'air traversant le module de refroidissement, augmentant ainsi fortement les pertes de charges, ce qui peut nuire au bon fonctionnement des échangeurs thermiques et potentiellement dégrader l'aérodynamisme du véhicule automobile. Afin de remédier à cet inconvénient, le module de refroidissement peut comporter, en plus de la sortie d'air de la turbomachine tangentielle, au moins une autre ouverture située au niveau d'une face arrière du module de refroidissement, cette face arrière étant juxtaposée à la sortie d'air de la turbomachine tangentielle. Ainsi, lorsque le véhicule est en roulage et a atteint une vitesse de déplacement suffisante, cette ou ces ouvertures permettent de laisser passer le flux d'air et de contourner (de l'anglais « by-pass ») la turbomachine tangentielle.

Le module de refroidissement peut par ailleurs comporter au moins un dispositif d'obturation permettant d'obstruer la ou les ouvertures supplémentaires. Ce dispositif d'obturation peut notamment présenter un ou plusieurs volets configurés pour pivoter entre une position dite d'ouverture et une position dite de fermeture, ce qui permet de réguler le flux d'air évacué par la ou les ouvertures supplémentaires le cas échéant.

Cependant, l'espace disponible au sein du véhicule automobile pour l'agencement du module de refroidissement est relativement restreint. Ainsi, l'équipement disposé autour du module de refroidissement, tel que le moteur électrique du véhicule électrique ou hybride, peut former un potentiel obstacle au flux d'air et/ou aux volets du dispositif d'obturation, notamment dans le cas où la ou les ouvertures supplémentaires et le ou les dispositifs d'obturation qui y sont associés sont agencés sur la face arrière du module de refroidissement. Il convient donc d'optimiser l'emplacement de cette ou ces ouvertures d'évacuation du flux d'air en fonction de l'agencement prévu pour les potentiels obstacles et de l'espace disponible autour du module de refroidissement tout en privilégiant une conception compacte de celui-ci.

Un exemple de module de refroidissement pour véhicule automobile présentant un crénage, un boîtier collecteur recevant une turbomachine tangentielle et présentant un évent et son dispositif d'obturation est par ailleurs connu du document US2005/029027A1.

Le but de la présente invention est donc de remédier au moins partiellement aux inconvénients de l'art antérieur et de proposer un module de refroidissement amélioré permettant d'évacuer le flux d'air en roulage tout en optimisant l'espace disponible.

La présente invention concerne donc un module de refroidissement pour véhicule automobile à moteur électrique ou hybride, ledit module de refroidissement étant destiné à être traversé par un flux d'air et comportant un carénage formant un conduit interne suivant une direction longitudinale du module de refroidissement à l'intérieur duquel est disposé au moins un échangeur de chaleur destiné à être traversé par le flux d'air et un boîtier colleteur disposé en aval du carénage suivant la direction longitudinale, ledit boîtier collecteur étant configuré pour recevoir une turbomachine tangentielle elle-même configurée pour générer le flux d'air, le boîtier collecteur comprenant en outre une ou plusieurs parois latérales qui s'étendent dans le prolongement du conduit interne du carénage, l'au moins une paroi latérale du boîtier collecteur comprenant au moins un évent destiné à évacuer le flux d'air ainsi qu'au moins un dispositif d'obturation du au moins un évent, ledit dispositif d'obturation étant mobile entre une position d'ouverture et une position de fermeture dudit au moins un évent, caractérisé en ce qu'au moins une des deux parois latérales (413) situées de part et d'autre des extrémités de la turbomachine (30) comportent l'au moins un évent (E) ainsi que l'au moins un dispositif d'obturation (43).

Un tel arrangement des évents au sein des parois latérales du boîtier collecteur du module de refroidissement permet d'envisager un agencement dans lequel l'environnement dudit module est disposé de telle sorte que le flux d'air puisse être évacué efficacement via le au moins un évent du boîtier collecteur et de telle sorte que le ou les volets pivotants du ou des dispositifs d'obturations ne soient pas amenés à heurter un ou des obstacles potentiellement juxtaposés au module de refroidissement. Les possibilités d'évacuation du flux d'air hors du module de refroidissement sont ainsi démultipliées.

L'invention peut en outre comprendre un ou plusieurs des aspects suivants pris seuls ou en combinaison :
- les deux parois latérales situées de part et d'autre des extrémités de la turbomachine comportent au moins un évent ainsi qu'au moins un dispositif d'obturation ;
- les évents et les dispositifs d'obturation sur chacune des deux parois latérales sont disposés symétriquement les uns aux autres par rapport à un plan de symétrie perpendiculaire à l'axe de rotation de la turbine de la turbomachine tangentielle ;
- seule l'une des parois latérales du boîtier collecteur situées de part et d'autre des extrémités de la turbomachine comprend au moins un évent ainsi qu'au moins un dispositif d'obturation du au moins un évent ;
- le au moins un dispositif d' obturation du au moins un évent est un volet monté pivotant autour d'un axe de pivotement parallèle à la direction longitudinale du module de refroidissement ;
- le au moins dispositif d'obturation du au moins un évent est monté pivotant autour d'un axe de pivotement parallèle à l'axe de rotation de la turbine de la turbomachine tangentielle ;
- le module comporte une unité de pilotage configurée pour piloter le au moins un dispositif d'obturation ;
- la au moins une paroi latérale du boîtier collecteur comprend une multitude d'évents ;
- chaque évent comporte un dispositif d'obturation qui lui est dédié ;
- l'unité de pilotage est configurée pour piloter chaque dispositif d'obturation de manière indépendante ;
- le au moins un dispositif d'obturation du au moins un évent comporte un joint d'étanchéité disposé sur ses bords destinés à venir au contact de la au moins une paroi latérale ; et
- le ou les bords du au moins un évent destiné à venir au contact du dispositif d'obturation comportent au moins un joint d'étanchéité.

D'autres caractéristiques et avantages de la présente invention apparaîtront plus clairement à la lecture de la description suivante, fournie à titre illustratif et non limitatif, et des dessins annexés dans lesquels :
[Fig 1] la figure 1 montre une représentation schématique de l'avant d'un véhicule automobile en vue de côté,
[Fig 2] la figure 2 montre une représentation schématique en perspective et en coupe partielle de l'avant d'un véhicule automobile et d'un module de refroidissement selon un premier mode de réalisation,
[Fig 3] la figure 3 montre une représentation schématique en perspective du boîtier collecteur du module de refroidissement de la figure 2,
[Fig 4] la figure 4 est similaire à la figure 2 et montre un module de refroidissement avec un boîtier collecteur selon une variante du premier mode de réalisation,
[Fig 5] la figure 5 montre une représentation schématique en perspective du boîtier collecteur du module de refroidissement de la figure 4,
[Fig 6] la figure 6 montre une vue en coupe d'un mode de réalisation d'un collecteur de module de refroidissement ne faisant pas partie de l'invention, et
[Fig 7] la figure 7 est une figure similaire à la figure 6 et montre une alternative du mode de réalisation du boîtier collecteur du module de refroidissement ne faisant pas partie de l'invention.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Sur l'ensemble des figures est représenté un trièdre XYZ afin de définir l'orientation des différents éléments les uns des autres. Une première direction, notée X, correspond à une direction longitudinale du véhicule. Elle correspond également à une direction inverse à la direction d'avancement du véhicule. Une deuxième direction, notée Y, est une direction latérale ou transversale. Enfin, une troisième direction, notée Z, est verticale. Les directions, X, Y, Z sont orthogonales deux à deux.

Sur l'ensemble des figures, le module de refroidissement selon la présente invention est illustré dans une position fonctionnelle, c'est-à-dire quand il est disposé au sein d'un véhicule automobile.

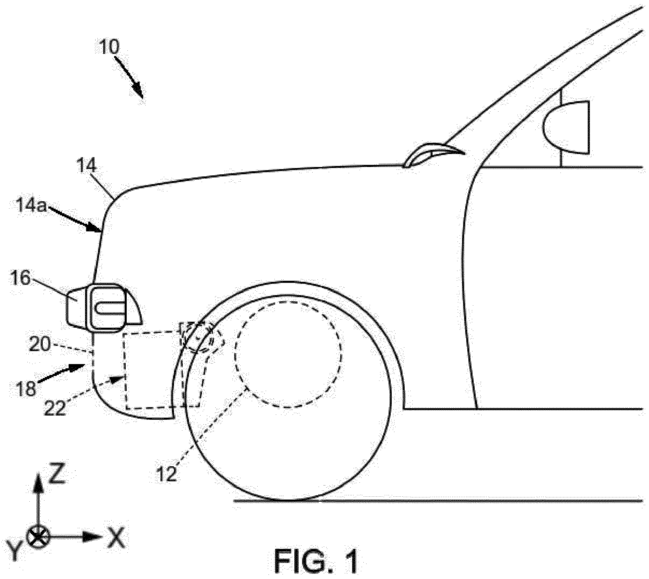

La figure 1 illustre de manière schématique la partie avant d'un véhicule automobile 10 électrique ou hybride pouvant comporter un moteur 12 électrique ou hybride. Le véhicule 10 comporte notamment une carrosserie 14 et un pare-chocs 16 portés par un châssis (non représenté) du véhicule automobile 10. Un module de refroidissement 22 est disposé en dessous du pare-chocs 16 et en regard du soubassement du véhicule automobile 10. Optionnellement, la carrosserie 14 peut définir une baie de refroidissement 18, c'est-à-dire une ouverture à travers la carrosserie 14. Cette baie de refroidissement 18 se trouve de préférence face au module de refroidissement 22. Une calandre 20 peut éventuellement protéger ce module de refroidissement 22.

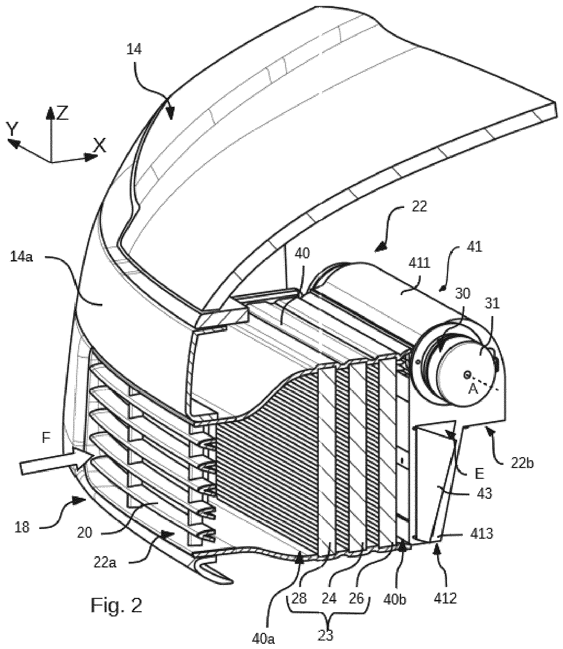

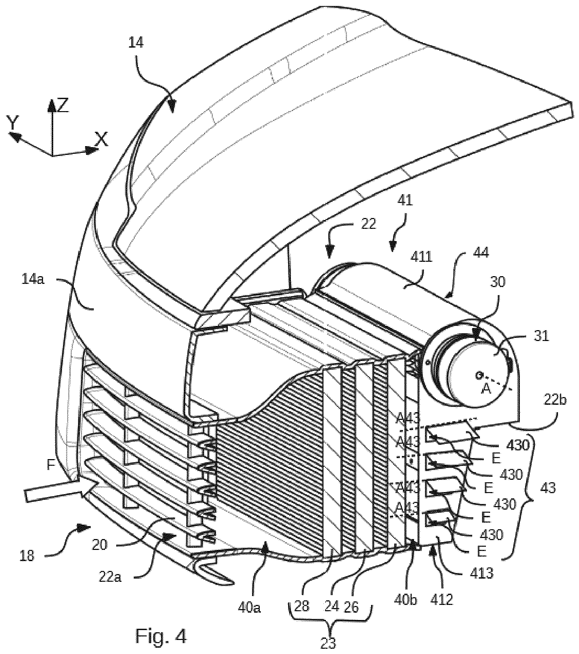

Comme le montrent les figures 2 et 4, le module de refroidissement 22 est destiné à être traversé par un flux d'air F parallèle à la direction X allant de l'avant vers l'arrière du véhicule 10. La direction X correspond plus particulièrement à l'axe longitudinal du module de refroidissement 22 et le flux d'air F circule depuis une entrée d'air 22a vers une sortie d'air 22b. Dans la présente demande, on qualifie un élément d'en « amont » ou d'en « aval » selon la direction longitudinale X du module de refroidissement 22, un élément qui est respectivement disposé plus vers l'avant ou vers l'arrière qu'un autre élément. L'avant correspond à l'avant du véhicule automobile 10 à l'état monté ou alors la face du module de refroidissement 22 par laquelle le flux d'air F est destiné à entrer dans le module de refroidissement 22. L'arrière correspond quant à lui à l'arrière du véhicule automobile 10 ou alors à la face du module de refroidissement 22 par laquelle le flux d'air F est destiné à ressortir du module de refroidissement 22.

De manière similaire, on entend par « supérieur » et « inférieur » une orientation selon la direction Z. Un élément dit supérieur sera plus proche du toit du véhicule 10 et un élément dit inférieur sera plus proche du sol.

Le module de refroidissement 22 comporte essentiellement un carénage 40 formant un conduit interne entre une extrémité amont 40a et une extrémité avale 40b opposées l'une à l'autre. Ce conduit interne est de préférence orienté suivant la direction X de sorte que l'extrémité amont 40a est orientée vers l'avant du véhicule 10 en regard de la baie de refroidissement 18 et de sorte que l'extrémité aval 40b est orientée vers l'arrière du véhicule 10.

À l'intérieur dudit carénage 40 est disposé au moins un échangeur de chaleur 24, 26, 28. Sur les figures 2 à 4, le module de refroidissement 22 comprend trois échangeurs de chaleur 24, 26, 28 regroupés au sein d'un ensemble d'échangeurs de chaleur 23. Il pourrait toutefois en comporter plus ou moins suivant la configuration souhaitée.

Un premier échangeur de chaleur 24 peut par exemple être configuré pour relâcher de l'énergie calorifique du flux d'air F. Ce premier échangeur de chaleur 24 peut plus particulièrement être un condenseur connecté à un circuit de refroidissement (non représenté), par exemple afin de refroidir les batteries du véhicule 10. Ce circuit de refroidissement peut par exemple être un circuit de climatisation apte à refroidir les batteries ainsi qu'un flux d'air interne à destination de l'habitacle du véhicule automobile.

Un deuxième échangeur de chaleur 26 peut également être configuré pour relâcher de l'énergie calorifique dans le flux d'air F. Ce deuxième échangeur de chaleur 26 peut plus particulièrement être un radiateur connecté à un circuit de gestion thermique (non représenté) d'éléments électriques tel que le moteur électrique 12.

Le premier échangeur de chaleur 24 étant généralement un condenseur d'un circuit de climatisation, ce dernier a besoin que le flux d'air F soit le plus « frais » possible en mode climatisation. Pour cela, le deuxième échangeur de chaleur 26 est de préférence disposé en aval du premier échangeur de chaleur 24 dans le sens de circulation du flux d'air F. Il est néanmoins tout à fait possible d'imaginer que le deuxième échangeur de chaleur 26 soit disposé en amont du premier échangeur de chaleur 24.

Le troisième échangeur de chaleur 28 peut lui aussi être configuré pour relâcher de l'énergie calorifique dans le flux d'air. Ce troisième échangeur de chaleur 28 peut plus particulièrement être un radiateur connecté à un circuit de gestion thermique (non représenté), pouvant être distinct de celui connecté au deuxième échangeur de chaleur 26, pour des éléments électriques tel que l'électronique de puissance. Il est également tout à fait possible d'imaginer que le deuxième 26 et le troisième 28 échangeur de chaleur soient connectés à un même circuit de gestion thermique, par exemple connectés en parallèle l'un de l'autre.

Toujours selon l'exemple illustré aux figures 2 à 4, le deuxième échangeur de chaleur 26 est disposé en aval du premier échangeur de chaleur 24 tandis que le troisième échangeur de chaleur 28 est disposé en amont du premier échangeur de chaleur 24. D'autres configurations peuvent néanmoins être envisageables comme par exemple les deuxième 26 et troisième 28 échangeurs de chaleurs disposés tous deux en aval ou en amont du premier échangeur de chaleur 24.

Sur le mode de réalisation illustré, chacun des échangeurs de chaleur 24, 26, 28 présente une forme générale parallélépipédique déterminée par une longueur, une épaisseur et une hauteur. La longueur s'étend le long de la direction Y, l'épaisseur le long de la direction X et la hauteur dans la direction Z. Les échangeurs de chaleur 24, 26, 28 s'étendent alors selon un plan général parallèle à la direction verticale Z et la direction latérale Y. Ce plan général est ainsi perpendiculaire à la direction longitudinale X du module de refroidissement 22, les échangeurs de chaleur 24, 26, 28 sont donc perpendiculaires au flux d'air F destiné à les traverser. Le carénage 40 épouse généralement la forme des échangeurs de chaleur 24. 26. 28 ainsi, le conduit interne du carénage 40 a donc lui également une forme générale parallélépipédique.

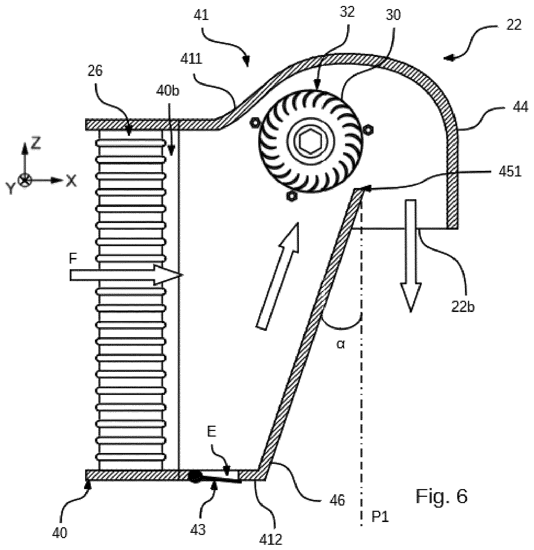

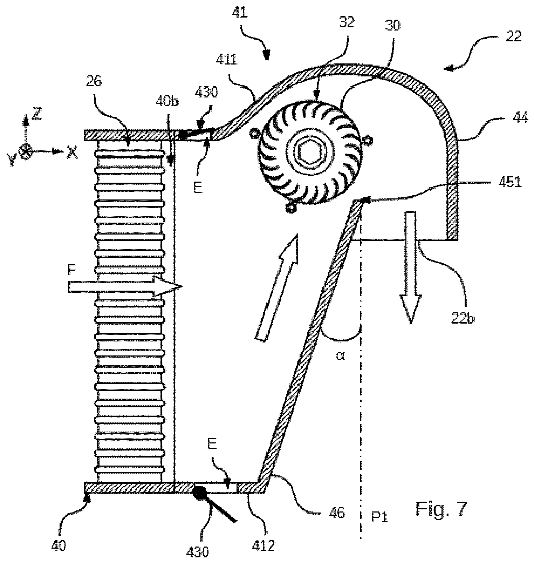

Le module de refroidissement 22 comporte également un boîtier collecteur 41 disposé en aval du carénage 40 et de l'ensemble 23 d'échangeurs de chaleur 24, 26, 28. Plus précisément, le boîtier collecteur 41 est juxtaposé à l'extrémité aval 40b du carénage 40, il est donc aligné avec le carénage 40 suivant l'axe longitudinal X du module de refroidissement 22. Ce boîtier collecteur 41 comporte la sortie d'air 22b destinée à refouler le flux d'air F. Le boîtier collecteur 41 permet ainsi de récupérer le flux d'air F traversant l'ensemble d'échangeurs de chaleur 23 et d'orienter ce flux d'air F vers la sortie d'air 22b, ceci est notamment illustré par les flèches représentant le flux d'air F sur les figures 6 et 7. Le boîtier collecteur 41 peut venir de matière avec le carénage 40 ou bien être une pièce rapportée fixée à l'extrémité avale 40b dudit carénage 40.

Le boîtier collecteur 41 comprend une ou plusieurs parois latérales 411, 412 et 413 qui s'étendent dans le prolongement du conduit interne du carénage 40. Dans le mode de réalisation illustré, le conduit interne du carénage 40 a une forme générale parallélépipédique, La partie amont du boîtier collecteur 41 prolongeant le conduit interne du carénage 40 a lui également une forme générale parallélépipédique.

Le boîtier collecteur 41 comprend plus particulièrement une paroi latérale supérieure 411 et une paroi latérale inférieure 412 qui s'étendent chacune dans un plan sensiblement parallèle à celui généré par les axes X et Y. La paroi latérale supérieure 411 et la paroi latérale inférieure 412 se situent en vis-à-vis l'une de l'autre. Le boîtier collecteur 41 comprend également deux parois latérales transversales 413 qui s'étendent chacune dans un plan sensiblement parallèle à celui généré par les axes X et Z. Les deux parois latérales transversales 413 servent de jonction entre la paroi latérale supérieure 411 et la paroi latérale inférieure 412, les parois latérales transversales 413 se situent en vis-à-vis l'une de l'autre.

L'écart suivant la direction Z entre la paroi latérale supérieure 411 et la paroi latérale inférieure 412 est notamment égal ou supérieur à la hauteur individuelle de l'un des échangeurs de chaleur 24, 26, 28. De manière similaire, l'écart suivant la direction Y entre les parois latérales transversales 413 est par exemple égal ou supérieure à la longueur individuelle des échangeurs de chaleur 24, 26, 28.

Selon des modes de réalisation non illustrés sur les figures, le conduit interne du carénage 40 et le boîtier collecteur 41 peuvent avoir une section de forme différente de celle d'un quadrilatère. Cette section peut notamment prendre la forme d'un hexagone (dans ce cas le carénage 40 et le boîtier collecteur 41 comportent respectivement six parois latérales), d'un octogone (dans ce cas le carénage 40 et le boîtier collecteur 41 comportent respectivement huit parois latérales) ou encore une forme circulaire (dans ce cas le carénage 40 et le boîtier collecteur 41 sont de forme cylindrique et comportent chacun une seule paroi latérale qui forme le manteau du cylindre). La section dépend principalement de la géométrie du au moins un échangeur de chaleur 24, 26, 28 disposé dans le conduit interne du carénage 40.

Le boîtier collecteur 41 peut comporter une volute 44 formée dans la paroi latérale supérieure 411 dudit boîtier 41. Cette volute 44 délimite au moins partiellement la sortie d'air 22b du flux d'air. Autrement dit, l'évacuation d'air de la volute 44 correspond à la sortie d'air 22b du flux d'air F du premier boîtier collecteur 41.

Le module de refroidissement 22, plus précisément le boîtier collecteur 41, comprend également au moins un ventilateur tangentiel, aussi nommé turbomachine tangentielle 30 configuré de sorte générer le flux d'air F traversant l'ensemble d'échangeurs de chaleur 23. Cette turbomachine tangentielle 30 est disposée dans le boîtier collecteur 41 de telle sorte que les parois latérales transversales 413 du boîtier collecteur 41 sont sensiblement perpendiculaires à l'axe de rotation A de la turbine 32, comme illustré plus particulièrement sur la Figure 2. Les parois latérales transversales 413 se situent plus particulièrement de part et d'autre des extrémités de la turbomachine 30.

La turbomachine tangentielle 30 comprend un rotor ou turbine 32 de forme sensiblement cylindrique. La turbine 32 comporte avantageusement plusieurs étages de pales (ou aubes), visibles sur les figures 6 et 7. La turbine 32 est montée rotative autour d'un axe de rotation A qui est par exemple parallèle à la direction Y. La turbine 32 est par exemple disposée au centre de la volute 44. Le diamètre de la turbine 32 est par exemple compris entre 35 mm et 200 mm pour limiter sa taille. La turbomachine tangentielle 30 est ainsi compacte.

La turbomachine tangentielle 30 peut également comporter un moteur 31 (visible sur les figures 2 à 5) configuré pour mettre en rotation la turbine 32. Le moteur 31 est par exemple adapté à entraîner la turbine 32 en rotation, à une vitesse comprise entre 200 tour/min et 14 000 tour/min. Ceci permet notamment de limiter le bruit généré par la turbomachine tangentielle 30.

Dans les exemples illustrés sur les figures 2 à 7, la turbomachine tangentielle 30 est dans une position haute, notamment dans le tiers supérieur du boîtier collecteur 41, de manière préférée dans le quart supérieur du boîtier collecteur 41. Ceci permet notamment de protéger la turbomachine tangentielle 30 en cas de submersion et/ou de limiter l'encombrement du module de refroidissement 22 dans sa partie inférieure. Dans ce cas de figure, la sortie d'air 22b du flux d'air F est préférentiellement orientée vers la partie inférieure du module de refroidissement 22.

Il est néanmoins possible d'imaginer que la turbomachine tangentielle 30 soit dans une position basse, notamment dans le tiers inférieur du boîtier collecteur 41. Cela permettrait de limiter l'encombrement du module de refroidissement 22 dans sa partie haute. Dans ce cas de figure, la sortie d'air 22b du flux d'air sera préférentiellement orientée vers la partie supérieure du module de refroidissement 22. Alternativement, la turbomachine tangentielle 30 peut être dans une position médiane, notamment dans le tiers médian de la hauteur du premier boîtier collecteur 41, par exemple pour des raisons d'intégration du module de refroidissement 22 dans son environnement. Ces alternatives ne sont pas illustrées.

Afin de guider l'air à l'issue de l'ensemble d'échangeurs de chaleur 23 vers la sortie d'air 22b, le boîtier collecteur 41 comporte, disposée en regard de l'extrémité avale 40b du carénage 40, une paroi de guidage 46 du flux d'air F vers la sortie d'air 22b. La paroi de guidage 46 comporte plus particulièrement un bord amont 451 (visible sur les figures 6 et 7) permettant de délimiter la sortie d'air 22b du flux d'air F de manière complémentaire avec la volute 44. Par bord amont 451, on entend ici le bord de la sortie d'air 22b le plus proche de l'extrémité avale 40b du carénage 40.

La paroi de guidage 46 peut notamment être inclinée par rapport à un plan orienté perpendiculairement à la direction longitudinale X du module de refroidissement 22. La paroi de guidage 46 peut plus particulièrement former un angle α aigu avec ce plan, comme illustré notamment sur les figures 6 et 7. L'angle α est par exemple compris entre 10° et 23°. L'inclinaison de la paroi de guidage 46 permet une meilleure circulation du flux d'air F au sein du boîtier collecteur 41 et limite les pertes de charges.

La paroi de guidage 46 peut comporter au moins une ouverture ainsi qu'au moins un volet pivotant 460 par ouverture. Ce au moins un volet pivotant 460 permet d'ouvrir ou de fermer la au moins une ouverture. Plus particulièrement, ledit au moins un volet 460 est monté pivotant entre une position d'ouverture et une position de fermeture de ladite ouverture O. Le au moins un volet 460 est monté sur une face externe 46b de la paroi de guidage 46. La face externe 46b désigne la face de la paroi de guidage 46 qui se trouve en regard de la sortie d'air 22b.

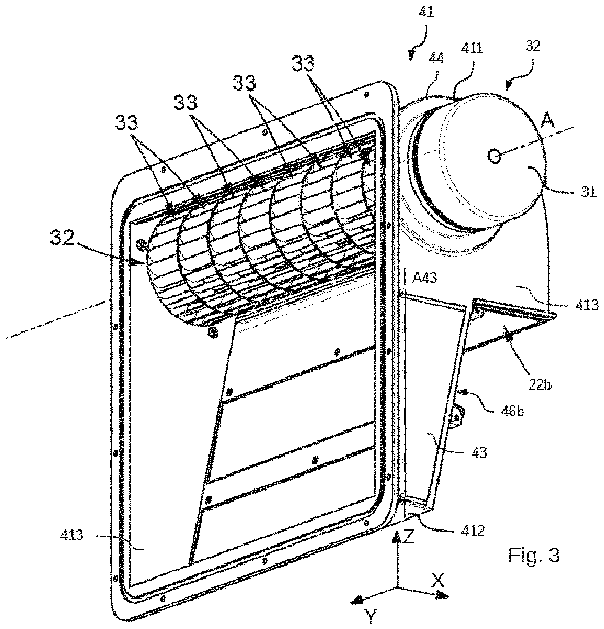

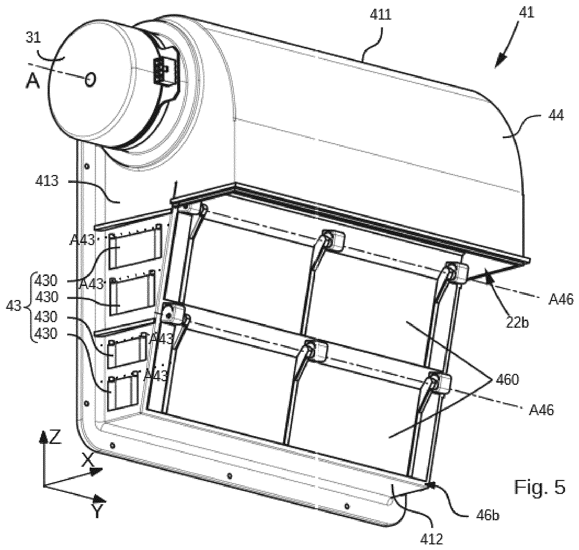

La paroi de guidage 46 peut comprendre une ou plusieurs ouvertures O. De ce fait, le module de refroidissement 22 peut comprendre un ou plusieurs volets 460. Il y a notamment autant de volets 460 montés sur la face externe 46b de la paroi de guidage 46 qu'il y a d'ouvertures O. Sur l'exemple des figures 3 et 5, le nombre de volets 460 s'élève à deux.

Le au moins un volet 460 est par exemple monté pivotant autour d'un axe de pivotement A46 (indiqué sur la figure 5) qui s'étend horizontalement à l'état monté au sein du véhicule automobile 10. L'axe de pivotement A46 est donc sensiblement parallèle à l'axe de rotation A de la turbomachine tangentielle 30, il est donc perpendiculaire à la direction longitudinale X du module de refroidissement 22. Le au moins un volet pivotant 460 peut prendre la forme d'un volet drapeau ou d'un volet papillon.

Le au moins un volet 460 est « libre » ou « passif » dans le sens où seule la gravité amène et maintient le au moins un volet pivotant 460 de la paroi de guidage 46 dans sa position de fermeture. Autrement dit, le module de refroidissement 22 ne comporte ni pièce mécanique, ni dispositif de commande configuré pour contrôler activement l'ouverture et/ou la fermeture du au moins un volet 460. Le au moins un volet 460 est donc toujours soumis à la gravité, mais lorsque le véhicule automobile 10 circule à une vitesse suffisamment élevée, le flux d'air F traversant le module de refroidissement 22 peut exercer une pression sur le au moins un volet 460 de manière à déplacer celui-ci de sa position de fermeture vers sa position d'ouverture. Dans ce cas, le flux d'air F ne passe plus par la volute 44 du boîtier collecteur 41, le flux d'air F « contourne » (« by-pass » en anglais) la turbomachine tangentielle 30 en passant directement par la au moins une ouverture O de la paroi de guidage 46.

Selon les différents modes de réalisation du module de refroidissement 22 décrits par la suite, la au moins une ouverture O au sein de la paroi de guidage 46 n'est pas le seul type d'ouverture prévu pour l'évacuation du flux d'air F, car l'au moins une paroi latérale 411, 412 et/ou 413 du boîtier collecteur 41 comprend au moins un évent E destiné à évacuer le flux d'air F ainsi qu'au moins un dispositif d'obturation 43 du au moins un évent E. Les possibilités d'évacuation du flux d'air F hors du module de refroidissement 22 sont ainsi démultipliées, ce qui permet à la fois d'avoir une meilleure circulation du flux d'air F et ainsi qu'un refroidissement plus efficace au sein dudit module 22.

Le dispositif d'obturation 43 du au moins un évent E est mobile entre une position d'ouverture et une position de fermeture dudit au moins un évent E. Ce dispositif d'obturation 43 peut notamment se présenter sous la forme d'un volet pivotant ou d'une multitude de volets pivotants, tels que des volets papillons ou des volets drapeaux. Plus particulièrement, le au moins dispositif d'obturation 43 du au moins un évent E est monté pivotant autour d'un axe de pivotement A43.

Selon un premier mode de réalisation illustré sur les figures 2 et 3 dans lequel le dispositif collecteur 41 a une forme générale parallélépipédique, seule l'une des parois latérales 413 du boîtier collecteur 41 situées de part et d'autre des extrémités de la turbomachine 30 comprend au moins un évent E ainsi qu'au moins un dispositif d'obturation 43 du au moins un évent E. L'autre paroi latérale 413 est donc dépourvue d'évent E (comme illustré sur la figure 3 plus particulièrement) de manière à former un obstacle infranchissable pour le flux d'air F en sortie de l'ensemble 23 des échangeurs de chaleur 24, 26, 28. Autrement dit, cette paroi latérale 413 dépourvue d'évent E et la paroi de guidage 46 font obstacle au flux d'air F qui est alors dirigé vers la paroi latérale 413 comportant la ou les évents E de manière à être évacué en dehors du module de refroidissement 22. Ce premier mode de réalisation permet de limiter les étapes de fabrication lors de la production.

Sur les figures 2 et 3, la paroi latérale 413 comporte un unique évent E et un unique dispositif d'obturation 43, mais la paroi latérale 413 peut évidemment en compter un plus grand nombre. Dans ce premier mode de réalisation, l'axe de pivotement A43 est sensiblement parallèle à l'axe Z, l'axe de pivotement A43 s'étend alors verticalement à l'état monté du véhicule automobile 10.

Ce premier mode de réalisation du boîtier collecteur 41 propose ainsi une conception particulièrement compacte du module de refroidissement 22. Sur la figure 3, le dispositif d'obturation 43 de la paroi latérale 413 visible est représenté dans une position ouverte tandis que sur la figure 3, il est représenté dans une position fermée.

Dans ce mode de réalisation particulier, le flux d'air F est alors destiné à être évacué que d'un côté latéral du module de refroidissement 22.

L'on peut également imaginer un ou plusieurs modes de réalisation du boîtier collecteur 41 dont l'au moins une paroi latérale 411, 412 et/ou 413 comprend une multitude d'évents E. Chaque évent E peut alors comporter un dispositif d'obturation qui lui est dédié. Ainsi, selon une variante du premier mode de réalisation illustrée sur les figures 4 et 5, les deux parois latérales transversales 413 comportent chacune au moins un évent E et au moins un dispositif d'obturation 43 du au moins un évent E. Le ou les évents E et le ou les dispositifs d'obturation 43 sont par exemple disposés symétriquement les uns aux autres par rapport à un plan de symétrie perpendiculaire à l'axe de rotation A de la turbine 32 de la turbomachine 30.

Dans l'exemple des figures 4 et 5, le nombre d'évents E et celui des volets pivotants 430 des dispositifs d'obturation 43 de chaque paroi latérale 413 est de quatre. Disposer d'une multitude d'évents E et de dispositifs d'obturation 43 permet de mieux réguler la circulation du flux d'air F lors de son évacuation hors du module de refroidissement. Dans cette variante du premier mode de réalisation, les axes de pivotement A43 sont sensiblement parallèle à la direction longitudinale X du module de refroidissement 22, les axes de pivotement A43 s'étendent alors horizontalement à l'état monté du véhicule automobile 10.

Sur la figure 4, les volets pivotants 430 des dispositifs d'obturation 43 de la paroi latérale 413 visible sont représentés dans une position ouverte tandis que sur la figure 5, ces volets pivotants 430 sont représentés dans une position fermée.

Selon un deuxième mode de réalisation du boîtier collecteur 41 illustré sur la figure 6, dans lequel le dispositif collecteur 41 a une forme générale parallélépipédique, seule la paroi latérale inférieure 412 comprend au moins un évent E et au moins un dispositif d'obturation 43 du au moins un évent E. L'axe de pivotement A43 s'étend parallèlement à l'axe de rotation A de la turbine 32 de la turbomachine tangentielle 30. Sur la figure 6, le volet 430 est représenté dans une position fermée : il bouche le passage de l'évent E.

Selon une alternative non illustrée de ce mode de réalisation, seule la paroi latérale supérieure 411 comprend au moins un évent E et au moins un dispositif d'obturation 43 du au moins un évent E. Selon une autre alternative du deuxième mode de réalisation du boîtier collecteur 41 illustré sur la figure 7, ce sont à la fois la paroi latérale supérieure 411 et la paroi latérale inférieure 412 du boîtier collecteur 41 qui comprennent chacune au moins un évent E et au moins un dispositif d'obturation 43 du au moins un évent E. Dans les deux alternatives de ce deuxième mode de réalisation, le flux d'air F issu de l'ensemble 23 des échangeurs de chaleur 24, 26, 28 est alors destiné à être évacué suivant une direction sensiblement parallèle à l'axe Z.

Le au moins un dispositif d'obturation 43 peut comporter un ou plusieurs joints d'étanchéité disposé sur ses bords destinés à venir au contact de la ou des parois latérales 411, 412 et/ou 413. Ce ou ces joints d'étanchéité peuvent permettre d'absorber le choc de l'impact des bords du dispositif d'obturation 43 sur le ou les bords du ou des au moins un évent E lorsque ledit dispositif d'obturation 43 amorce sa position de fermeture.

De même, le ou les bords du au moins un évent E destinés à venir au contact du dispositif d'obturation 43 de la ou des parois latérales 411, 412 et/ou 413 peuvent comporter au moins un joint d'étanchéité. Ce ou ces joints d'étanchéité peuvent être réalisés par surmoulage du ou des bords du au moins un évent E. Alternativement, le ou les joints d'étanchéité peuvent être des pièces rapportées.

En outre, le module de refroidissement 22 peut comporter une unité de pilotage (non représentée sur les figures) configurée pour piloter le dispositif d'obturation 43. L'unité de pilotage peut être configurée pour positionner et immobiliser le dispositif d'obturation 43 dans au moins une position intermédiaire lors d'un déplacement dudit dispositif d'obturation 43 entre sa position ouverte et sa position d'obturation.

Par ailleurs, l'unité de pilotage peut être configurée pour piloter chaque volet pivotant 430 de manière indépendante. L'on peut ainsi imaginer des configurations où un ou plusieurs volets pivotants 430 obstruent les évents E auxquels ils sont rattachés tandis que d'autres volets pivotants 430 adoptent une position d'ouverture ou encore une position intermédiaire. Une telle configuration est notamment illustrée sur la figure 7 dans laquelle le volet pivotant 430 situé sur la paroi latérale supérieure 411 est représenté dans sa position fermée tandis que le volet pivotant 430 situé sur la paroi latérale inférieure 412 est représenté dans sa position ouverte.

À l'inverse, le au moins un dispositif d'obturation 43 peut être passif dans le sens où il est dépourvu d'un actionneur ou d'un système d'actionneurs ou encore d'un ou plusieurs éléments élastiques pour maintenir le au moins un volet 430 du dispositif d'obturation 43 dans sa position de fermeture de l'évent E.

L'invention n'est pas limitée aux exemples de réalisation décrits en regard des figures et d'autres modes de réalisation apparaîtront clairement à l'homme du métier. Notamment, les différents exemples peuvent être combinés, tant qu'ils sont couverts par les revendications.

## Revendications

1. Module de refroidissement (22) pour véhicule automobile (10) électrique ou hybride, ledit module de refroidissement (22) étant destiné à être traversé par un flux d'air (F) et comportant :
- un carénage (40) formant un conduit interne suivant une direction longitudinale (X) du module de refroidissement (22) à l'intérieur duquel est disposé au moins un échangeur de chaleur (24, 26, 28) destiné à être traversé par le flux d'air (F),
- un boîtier colleteur (41) disposé en aval du carénage (40) suivant la direction longitudinale (X), ledit boîtier collecteur (41) étant configuré pour recevoir une turbomachine tangentielle (30) elle-même configurée pour générer le flux d'air (F), le boîtier collecteur (41) comprenant en outre une ou plusieurs parois latérales (411, 412, 413) qui s'étendent dans le prolongement du conduit interne du carénage (40), l'au moins une paroi latérale (411, 412, 413) du boîtier collecteur (41) comprenant au moins un évent (E) destiné à évacuer le flux d'air (F) ainsi qu'au moins un dispositif d'obturation (43) du au moins un évent (E), ledit dispositif d'obturation (43) étant mobile entre une position d'ouverture et une position de fermeture dudit au moins un évent (E), **caractérisé en ce qu'**au moins une des deux parois latérales (413) situées de part et d'autre des extrémités de la turbomachine (30) comportent l' au moins un évent (E) ainsi que l'au moins un dispositif d'obturation (43).

2. Module de refroidissement (22) selon la revendication précédente, **caractérisé en ce que** les deux parois latérales (413) situées de part et d'autre des extrémités de la turbomachine (30) comportent au moins un évent (E) ainsi qu'au moins un dispositif d'obturation (43).

3. Module de refroidissement (22) selon la revendication précédente, **caractérisé en ce que** les évents (E) et les dispositifs d'obturation (43) sur chacune des deux parois latérales (413) sont disposés symétriquement les uns aux autres par rapport à un plan de symétrie perpendiculaire à l'axe de rotation (A) de la turbine (32) de la turbomachine tangentielle (30).

4. Module de refroidissement (22) selon l'une des revendications précédentes, **caractérisé en ce que** seule l'une des parois latérales (413) du boîtier collecteur (41) situées de part et d'autre des extrémités de la turbomachine (30) comprend au moins un évent (E) ainsi qu'au moins un dispositif d'obturation (43) du au moins un évent (E).

5. Module de refroidissement (22) selon l'une quelconque des revendications précédentes, **caractérisé en ce que** le au moins un dispositif d'obturation (43) du au moins un évent (E) est un volet (430) monté pivotant autour d'un axe de pivotement (A43) parallèle à la direction longitudinale (X) du module de refroidissement (22).

6. Module de refroidissement (22) selon l'une quelconque des revendications précédentes, **caractérisé en ce que** le au moins dispositif d'obturation (43) du au moins un évent (E) est monté pivotant autour d'un axe de pivotement (A43) parallèle à l'axe de rotation (A) de la turbine (32) de la turbomachine tangentielle (30).

7. Module de refroidissement (22) selon l'une quelconque des revendications précédentes, **caractérisé en ce qu'**il comporte une unité de pilotage configurée pour piloter le au moins un dispositif d'obturation (43).

8. Module de refroidissement (22) selon l'une quelconque des revendications précédentes, **caractérisé en ce que** l'au moins une paroi latérale (411, 412, 413) du boîtier collecteur (41) comprend une multitude d'évents (E).

## Patentansprüche

1. Kühlmodul (22) für ein elektrisches oder hybrides Kraftfahrzeug (10), wobei das Kühlmodul (22) dazu bestimmt ist, von einem Luftstrom (F) durchströmt zu werden und umfassend:
- eine Verkleidung (40), die einen internen Kanal in einer Längsrichtung (X) des Kühlmoduls (22) bildet, in dem mindestens ein Wärmetauscher (24, 26, 28) angeordnet ist, der dazu bestimmt ist, vom Luftstrom (F) durchströmt zu werden,
- ein Sammlergehäuse (41), das in Längsrichtung (X) stromabwärts der Verkleidung (40) angeordnet ist, wobei das Sammlergehäuse (41) konfiguriert ist, eine Tangentialturbine (30) aufzunehmen, die selbst konfiguriert ist, den Luftstrom (F) zu erzeugen, wobei das Sammlergehäuse (41) ferner eine oder mehrere Seitenwände (411, 412, 413) umfasst, die sich in Verlängerung des internen Kanals der Verkleidung (40) erstrecken, wobei die mindestens eine Seitenwand (411, 412, 413) des Sammlergehäuses (41) mindestens eine Entlüftungsöffnung (E) umfasst, die dazu bestimmt ist, den Luftstrom (F) abzuführen, sowie mindestens eine Verschlussvorrichtung (43) für die mindestens eine Entlüftungsöffnung (E), wobei die Verschlussvorrichtung (43) zwischen einer Öffnungsposition und einer Schließposition der mindestens einen Entlüftungsöffnung (E) beweglich ist, **dadurch gekennzeichnet, dass** mindestens eine der beiden Seitenwände (413), die sich auf beiden Seiten der Enden der Turbine (30) befinden, die mindestens eine Entlüftungsöffnung (E) sowie die mindestens eine Verschlussvorrichtung (43) aufweist.

2. Kühlmodul (22) nach dem vorhergehenden Anspruch, **dadurch gekennzeichnet, dass** die beiden Seitenwände (413), die sich auf beiden Seiten der Enden der Turbine (30) befinden, mindestens eine Entlüftungsöffnung (E) sowie mindestens eine Verschlussvorrichtung (43) aufweisen.

3. Kühlmodul (22) nach dem vorhergehenden Anspruch, **dadurch gekennzeichnet, dass** die Entlüftungsöffnungen (E) und die Verschlussvorrichtungen (43) auf jeder der beiden Seitenwände (413) symmetrisch zueinander in Bezug auf eine Symmetrieebene angeordnet sind, die senkrecht zur Drehachse (A) der Turbine (32) der Tangentialturbine (30) verläuft.

4. Kühlmodul (22) nach einem der vorhergehenden Ansprüche, **dadurch gekennzeichnet, dass** nur eine der Seitenwände (413) des Sammlergehäuses (41), die sich auf beiden Seiten der Enden der Turbine (30) befinden, mindestens eine Entlüftungsöffnung (E) sowie mindestens eine Verschlussvorrichtung (43) für die mindestens eine Entlüftungsöffnung (E) umfasst.

5. Kühlmodul (22) nach einem der vorhergehenden Ansprüche, **dadurch gekennzeichnet, dass** die mindestens eine Verschlussvorrichtung (43) der mindestens einen Entlüftungsöffnung (E) eine Klappe (430) ist, die schwenkbar um eine Schwenkachse (A43) parallel zur Längsrichtung (X) des Kühlmoduls (22) montiert ist.

6. Kühlmodul (22) nach einem der vorhergehenden Ansprüche, **dadurch gekennzeichnet, dass** die mindestens eine Verschlussvorrichtung (43) der mindestens einen Entlüftungsöffnung (E) schwenkbar um eine Schwenkachse (A43) parallel zur Drehachse (A) der Turbine (32) der Tangentialturbine (30) montiert ist.

7. Kühlmodul (22) nach einem der vorhergehenden Ansprüche, **dadurch gekennzeichnet, dass** es eine Steuereinheit umfasst, die konfiguriert ist, die mindestens eine Verschlussvorrichtung (43) zu steuern.

8. Kühlmodul (22) nach einem der vorhergehenden Ansprüche, **dadurch gekennzeichnet, dass** die mindestens eine Seitenwand (411, 412, 413) des Sammlergehäuses (41) eine Vielzahl von Entlüftungsöffnungen (E) umfasst.

## Claims

1. Cooling module (22) for an electric or hybrid motor vehicle (10), said cooling module (22) being intended to be traversed by an air flow (F) and comprising:
- a fairing (40) forming an internal duct along a longitudinal direction (X) of the cooling module (22) inside which is arranged at least one heat exchanger (24, 26, 28) intended to be traversed by the air flow (F),
- a collector housing (41) arranged downstream of the fairing (40) along the longitudinal direction (X), said collector housing (41) being configured to receive a tangential turbomachine (30) itself configured to generate the air flow (F), the collector housing (41) further comprising one or more lateral walls (411, 412, 413) which extend in the extension of the internal duct of the fairing (40), the at least one lateral wall (411, 412, 413) of the collector housing (41) comprising at least one vent (E) intended to evacuate the air flow (F) as well as at least one closure device (43) of the at least one vent (E), said closure device (43) being movable between an open position and a closed position of said at least one vent (E), **characterized in that** at least one of the two lateral walls (413) located on either side of the ends of the turbomachine (30) include the at least one vent (E) as well as the at least one closure device (43).

2. Cooling module (22) according to the preceding claim, **characterized in that** the two lateral walls (413) located on either side of the ends of the turbomachine (30) include at least one vent (E) as well as at least one closure device (43).

3. Cooling module (22) according to the preceding claim, **characterized in that** the vents (E) and the closure devices (43) on each of the two lateral walls (413) are arranged symmetrically to each other with respect to a plane of symmetry perpendicular to the axis of rotation (A) of the turbine (32) of the tangential turbomachine (30).

4. Cooling module (22) according to one of the preceding claims, **characterized in that** only one of the lateral walls (413) of the collector housing (41) located on either side of the ends of the turbomachine (30) comprises at least one vent (E) as well as at least one closure device (43) of the at least one vent (E).

5. Cooling module (22) according to any one of the preceding claims, **characterized in that** the at least one closure device (43) of the at least one vent (E) is a flap (430) pivotally mounted around a pivot axis (A43) parallel to the longitudinal direction (X) of the cooling module (22).

6. Cooling module (22) according to any one of the preceding claims, **characterized in that** the at least one closure device (43) of the at least one vent (E) is pivotally mounted around a pivot axis (A43) parallel to the axis of rotation (A) of the turbine (32) of the tangential turbomachine (30).

7. Cooling module (22) according to any one of the preceding claims, **characterized in that** it comprises a control unit configured to control the at least one closure device (43).

8. Cooling module (22) according to any one of the preceding claims, **characterized in that** the at least one lateral wall (411, 412, 413) of the collector housing (41) comprises a multitude of vents (E).
